# EUROPEAN PATENT SPECIFICATION

(11) **EP 2 767 056 B1**
(45) Date of publication and mention of the grant of the patent: **06.04.2016**
(21) Application number: 11805856.9
(22) Date of filing: 23.12.2011
(51) Int. Cl.: H04L 29/06

(54) **A METHOD AND A SYSTEM TO DETECT MALICIOUS SOFTWARE**
VERFAHREN UND SYSTEM ZUM ERKENNEN VON SCHADPROGRAMMEN
PROCÉDÉ ET SYSTÈME POUR DÉTECTER UN LOGICIEL MALVEILLANT

(30) Priority: 14.10.2011 ES 201131650 P
(43) Date of publication of application: 20.08.2014
(73) Proprietor: Telefónica, S.A., 28013 Madrid (ES)
(72) Inventor: ROMERO BUENO, Francisco, E-28013 Madrid (ES); AMAYA CALVO, Antonio Manuel, E-28013 Madrid (ES)
(74) Representative: Carlos Hernando, Borja
(86) International application number: PCT/EP2011/073949
(87) International publication number: WO 2013/053407

(56) References cited:
- EP-A1- 2 222 048
- US-A1- 2007 289 013
- US-B1- 7 634 808
- US-B1- 8 015 133

## Description

### Field of the art

The present invention generally relates, in a first aspect, to a method to detect malicious software, said detection being performed in an Anomaly Detection System, or ADS, by analyzing the behavior of a network and looking for deviations with respect to a normality, said normality indicating common behavior of users of said network and being defined previous to said detection, and more particularly to a method that comprises building a plurality of detection models, each of said plurality of detection models adapted to different entities of said network and to different algorithms, said different algorithms implementing different detection strategies and said plurality of detection models representing said normality.

A second aspect of the invention relates to a system arranged to implement the method of the first aspect.

### Prior State of the Art

Malicious software (malware) detection can be classified in many ways. One of them is the classical categorization that distinguishes between host-based and network-based detection. The first type tries to find evidences of the existence of viruses, Trojans, etc by means of processes, physical memory and several other in-host analysis, while the second focuses on the communications performed by such viruses or Trojans.

Several strategies arose in the early days of the network-based detection. The more basic one was to block certain communications traversing a special network node, a firewall. This solution was useful until malware, in order to hide, started to use wide used protocols such as HTTP, SMTP that cannot be blocked without stopping the business of ISPs and operators.

Then, it was obvious that analyzing a few fields of the TCP/IP packets (protocol, source and destination ports, and IP addresses) was not enough, and it was necessary to extend the monitoring process to the complete TCP/IP header and even the payload of the packets. This was how Network Intrusion Detection Systems (NIDS or IDS) born [15]. IDS are based on traffic signatures, i.e., special strings that, when appear within the network packets, denote the presence of a specific malware. Wide known IDS are Snort [1] and Bro [2].

Although nowadays IDS continue playing an important role in the monitoring processes of operators all around the world, since they address an important percentage of malware detection, researchers found that some malware remained undetectable to firewalls and IDSs. These undetectable viruses, worms, etc. both used popular protocols and a priori normal content within packets payload Some examples are: spammers [3], denial of service (DoS) oriented bots [4] or scanners [5]. Then, it was seen that the only way to detect these threats was to analyze the behavior of the network in order to find deviations with respect to the normality, i.e., anomalies. The normality is defined through a mathematical representation of the common reality, i.e., a model, which is built in a step previous to the detection. Network Anomaly Detection Systems (NADS) [14] or simply Anomaly Detection Systems (ADS) such as Proventia [6] quickly revealed to be useful covering the mentioned gap in the monitoring field. And also in many other scenarios, such as zero-day malware detection (new existing malware for which IDSs have not a valid signature) or encrypted traffic (signatures has nothing to do when the payload cannot be seen).

Anomaly detection is still an interesting research area that can give lot of solutions for security administrators. Innovative Artificial Intelligence (Al) algorithms are emerging, and the target of the modeling, which sometimes is most important than the detection algorithm itself, varies between the most general granularity, the whole network, to the minimal one, the individual final user.

Examples of anomaly detection systems can be found in US2007/289013 and US8015133.

Two types of problems can be distinguished when talking about existing ADS's, efficacy-related and efficiency-related ones.

Efficacy problems are evident in all companies' every day. Their already deployed systems do not detect everything, and the things they should detect are not properly found due to obsolete strategies and mechanisms.

### - Per-network basis behavior modeling

Models regarding the behavior of monitored networks are always aggregation-based, counting the number of packets/flows/bytes per time unit and defining thus a baseline. While it is true that this approach is enough to deal with major treats such as DoS attacks [4], where a big amount of data is generated, it has nothing to do with more discrete and sophisticated attacks based on very low variations of certain traffic characteristics which are only appreciable at the single-entity level.

### - Rudimentary detection algorithms

Condition-consequence rules and volumes/thresholds are almost all the technologles Implemented In most of the successful NADS. These are very basic algorithms hard to maintain (new conditions must be considered when a treat evolves), showing very low flexibility (a threshold of 1000000 bytes with rise up when 1000001 bytes are fond) and poor not self-adapting.

Most of the efficiency-related problems regarding existing solutions are due to lack of a common framework for monitoring purposes. Each solution is proprietary and heavily closed to third parties, causing organizations to install a new battery of solutions each time a new treat arises.

### - Null integration level between vendors

Except for SIEM's [9], a special kind of systems not in charge of direct network monitoring, but in charge of different sources' events aggregation and correlation, no integration is allowed between current monitoring systems (including ADS's), and not only monitoring systems: sniffing tools, logging applications, etc. For instance, it's very common that IDS's/IPS's/ADS's sniff the network traffic their selves, while a lot of sniffing systems do the same task.

### - Low customization/extension level

One of the main problems the monitoring systems and ADS's in particular have regarding their architecture is the lack of flexibility. Current commercial and research anomaly detection solutions are heavily closed and proprietary, what makes almost impossible any kind of customization/extension. This low customizing level could seem normal in any other kind of software system, but not in the monitoring field, where the security operators need to face up the continuous evolution of the malware by means of new algorithms, strategies, sources of data, etc.

### - Multiple monitoring points

In addition, if an organization expects to use several NADS (because each one of them targets a different threat) then each individual NADS will require an exclusive monitoring point where to obtain the raw traffic from. This could seem a minor problem if the monitoring points were not costly to provide. On the one hand, physical taping solutions must cut the wire for a few seconds, but enough to stop critical applications, and the division of the optic power must be done very carefully in order to allow the endpoints continue negotiating the link. On the other hand, logical taps such as port mirroring consume a high amount of processing capabilities in the network nodes; additionally, each monitoring application needs an exclusive port in the node.

### - Monolithic applications

Finally, existing solutions are designed to run in a single box, avoiding a desirable processing distribution feature. Monolithic applications usually require big amounts of resources such as CPU, RAM memory and disk to deal with high-speed networks.

### Description of the Invention

It is necessary to offer an alternative to the state of the art which covers the gaps found therein, particularly related to the lack of proposals which really allow detecting all possible malicious software and deploying a common framework for monitoring purposes so that organizations do not need to install a new battery of solutions each time a new treat arises.

To that end, the present Invention provides, in a first aspect a method to detect malicious software, said detection being performed in an Anomaly Detection System, or ADS, by analyzing the behavior of a network and looking for deviations with respect to a normality, said normality indicating common behavior of users of said network and being defined previous to said detection.

On contrary to the known proposals, the method of the invention, in a characteristic manner it further comprises building a plurality of detection models, each of said plurality of detection models adapted to different entities of said network and to different algorithms, said different algorithms implementing different detection strategies and said plurality of detection models representing said normality.

Other embodiments of the method of the first aspect of the invention are described according to appended claims 1 to 15, and in a subsequent section related to the detailed description of several embodiments.

A second aspect of the present invention concerns to a system to detect malicious software, said detection being performed in an Anomaly Detection System, or ADS, by analyzing the behavior of a network and looking for deviations with respect to a normality, said normality indicating common reality of said network and being defined previous to said detection.

In the system of the second aspect of the invention, on contrary to the known systems mentioned in the prior state of the art section, and in a characteristic manner it comprises a probe module for traffic monitoring of said network connected to a controller module in charge of performing said detection, wherein said controller module is provided of a plurality of detection models built by means of a compiler module, each of said plurality of detection models adapted to different entities of said network and to different algorithms, said different algorithms implementing different detection strategies and said plurality of detection models representing said normality.

The system of the second aspect of the Invention is adapted to implement the method of the first aspect.

Other embodiments of the system of the second aspect of the invention are described according to appended claims 16 to 22, and in a subsequent section related to the detailed description of several embodiments.

### Brief Description of the Drawings

The previous and other advantages and features will be more fully understood from the following detailed description of embodiments, with reference to the attached drawings, which must be considered in an illustrative and non-limiting manner, in which:
Figure 1 shows the components and the interaction between them, said components and interactions defining a possible architecture of the proposed system, according to an embodiment of the present invention.
Figure 2 shows the probe module, according to an embodiment of the present invention.

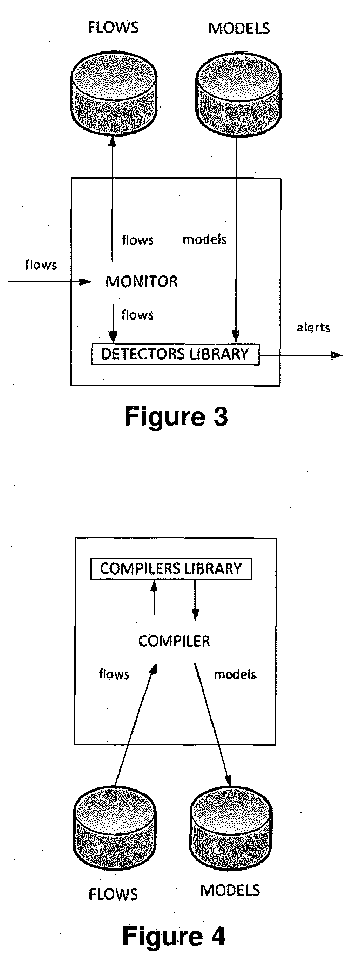

Figure 3 shows the monitor module and the detectors library, according to an embodiment of the present invention.
Figure 4 shows the compiler module and the compilers library, according to an embodiment of the present invention.

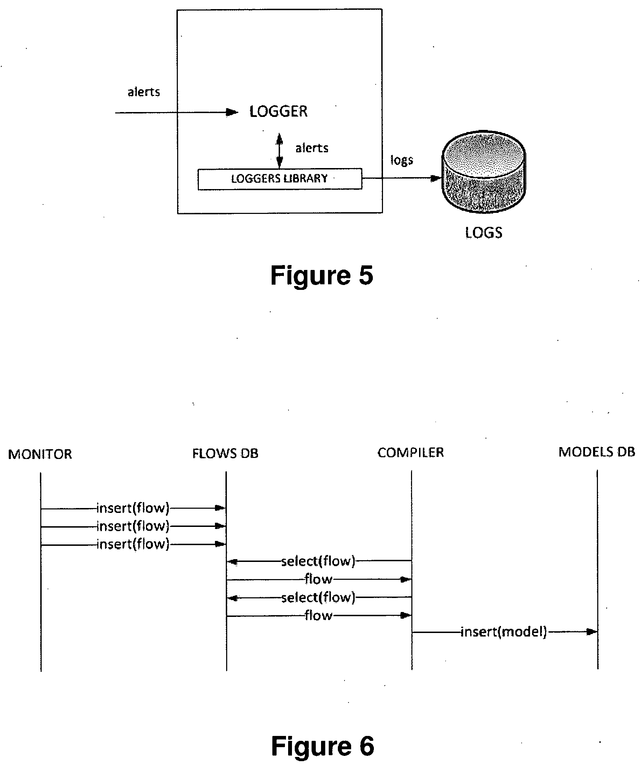

Figure 5 shows the logger module and the loggers library, according to an embodiment of the present invention.
Figure 6 shows a possible sequence diagram between the monitor module and the compiler module, wherein the monitor module and the compiler module make use of the monitor-compiler interface, according to an embodiment of the present invention.
Figure 7 shows the flow chart for DNS-based domain flux detector, according to an embodiment of the present invention.
Figure 8 shows a graphical-based representation of clusters when using the suspicious traffic clustering, wherein normal vectors are represented by "0", anomalies by "x" and clusters by circles, according to an embodiment of the present invention.
Figure 9 shows a 2-features graphical representation of the quick cluster belonging algorithm, according to an embodiment of the present invention.
Figure 10 shows an example of distributed physical deployment of the system components, according to an embodiment of the present invention.

### Detailed Description of Several Embodiments

The proposed invention regards to hardware and software equipment (or set of equipments If its components are finally distributed) acting as a platform allowing much more efficacy and efficiency in the network anomaly detection field.

The efficacy gain is obtained thanks to the combination of two innovative approaches:
- The usage of detection models in a per-user fashion. Instead of creating a single model for a whole network, each entity within it is modeled.
- The usage of detection models in a per-algorithm fashion. Instead of having a unique detection strategy, multiple detector instances run in parallel.

The above two approaches can be seen as a model matrix where N entities (E₁-..E_{N}) and M algorithms (A₁...A_{M}) are considered, obtaining NxM different models (M₁₁...M_{NM}).

Model and their respective detectors can be either state of art ADS (they can be considered simple 1x1 matrices, since a single modeled entity and just one algorithm are used) or Innovative detection algorithms, as the two Artificial Intelligence-based later explained.

In addition, other architectural features available in the proposed invention allow much more efficiency in terms of:
- The distribution of the processing effort between several physical nodes.
- Easy integration of existing monitoring-related software, such a as network traffic processors, by architectural-design.
- A single monitoring point in the network.
   - Architecture components

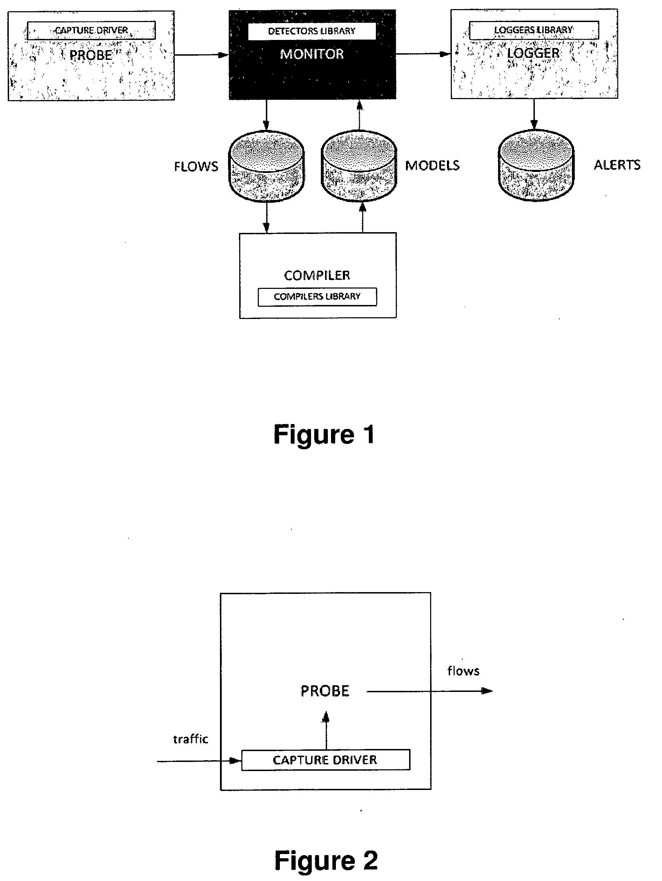

System components and the Interaction between them were shown in Figure 1. Clear grey boxes represented SoA components, dark grey one represented modified SoA and white boxes, including the detectors and compilers libraries, are innovative components within the architecture. Next, the system components will be detailed:

### - PROBE

It is the single monitoring point, providing network traffic traces to the rest of the system components.

The anomaly detection performed by the Multi-algorithm ADS applications is based on network traffic, specifically searching for deviations from the normality in the TCP/IP packets traversing the monitored network. To do this it's necessary (1) to capture those packets from the physical media and (2) to prepare the captured packets for the detection algorithms, which usually work with aggregated flows (a flow is defined, at least, by the transport protocol - TPC or UDP -, the source and destination IP addresses and source and destination ports). The PROBE is the component in charge of packets capture and processing into flows, as shown in Figure 2.

PROBES can also be legacy ones, for which are simply necessary to deploy an adapter in order to accomplish with the Interface between PROBES and the MONITOR.

### - MONITOR and DETECTORS LIBRARY

The MONITOR is the main controller of the system, receiving network traces from the PROBE and responsible for (1) traces storage if working in training mode and (2) DETECTORS invocation - passing them a copy of the traces - if working in detection mode. The DETECTORS LIBRARY is a collection of DETECTORS implementing each one a NADS algorithm.

Once the network traffic is aggregated into flows it is ready to be analyzed using a wide variety of anomaly detection algorithms. Nevertheless, it must be remembered that the traffic can be either stored (in order to build the normal models) either used by the detection algorithms. So, some entity must (1) know if the system is currently running in storing or detection mode and (2) forward the traffic to the storage component or to the detection entities depending on the running mode. The proposed invention implements this by means of the MONITOR.

Regarding the detection, since the algorithms portfolio cannot be complete (impossibility to implement all the existent algorithms, not already discovered algorithms) it would be very convenient to have a mechanism to tune the detection system (adding, removing or modifying algorithms). The system architecture provides such a pluggable mechanism by means of the DETECTORS LIBRARY. The DETECTORS LIBRARY is a discrete collection of detection algorithms, the current collection, having a defined interface with the MONITOR. A new detection algorithm - formerly, a DETECTOR - can be included into the collection if such DETECTOR respects the defined interface with the MONITOR. All the DETECTORS within the library have not to be always used, and if it exists the possibility to enumerate the desired subset of algorithms to the MONITOR. This can be done by means of configuration files, for example.

The MONITOR then simply forwards as previously said, through the defined interface, the received flows to all the DETECTORS within the DETECTORS LIBRARY. Finally, the DETECTORS compare the incoming flows with the stored normal behavior models.

The DETECTORS LIBARY is originally conceived, precisely, as a library that is natively incorporated to the MONITOR software (static or dynamic libraries in C/C++, JAR files in Java, etc). The purpose of this decision is to improve the flows delivery to the DETECTORS, but the developer can implement the library as a set of processes running independently of the MONITOR, for example; even, the DETECTORS can be placed in separated physical devices.

### - COMPILER and COMPILER LIBRARY

The COMPILER Is responsible for COMPILERS invocation when the system works in training mode. It runs once the traces storing phase ends. The COMPILER LIBRARY is a collection of COMPILERS Implementing each one a behavior modeling mechanism.

The COMPILER is the module of the Multi-algorithmic ADS architecture involved in the generation of normal behavior models and, thus, is the central component of the proposed invention. As known, anomaly detection algorithms generally compare the observed traffic with a normal model, searching for deviations between one and the other. Since the detection algorithms can be very different then their baseline models will also be very different in spite of the data used to generate them is the same (the captured and aggregated traffic). The COMPILER is responsible for generating these differentiated models generation through the COMPILERS LIBRARY, which contains one model generator - formerly, a COMPILER - per detection algorithm in the system. COMPILERS within the library can be enabled or disabled.

Nevertheless, the COMPILER is an optional component since some DETECTORS could not need a personalized model (a default model is always used independently of the specific behavior of the users); or the models can have been generated by other means; or even the DETECTOR does not need a model.

### - LOGGER and LOGGERS LIBRARY

The LOGGER receives alerts from the MONITOR and invokes the LOGGERS. The LOGGERS LIBRARY is a collection of LOGGERS implementing each one a logging facility.

Finally, the collaborative alarms generated can be logged, task for which the LOGGER component is introduced in the architecture (once more, an exhaustive logging portfolio is unaffordable, so a LOGGERS LIBRARY is used to dynamically add or remove logging facilities: files, databases, Syslog, etc}. Existent LOGGERS could be enabled or disabled In the configuration.

### • Architecture interfaces

Next, interfaces between the system components will be described:

### - PROBE - MONITOR

This interface defines how the flows generated at the PROBE component are sent to the MONITOR component. Communications, basically, can implement two different schemas depending on the PROBE proactively:
1. Proactive exchange: the PROBE sent the flows at the time they are ready to be shared.
2. On-demand exchange: the flows are sent when the MONITOR requests them.

The use of one or other schema has an important impact on the real-time performance. On the one hand, it's obvious that on-demand exchange is not real-time compliant since the data forwarding depends on the availability of the MONITOR. On the other hand, it could be though that proactive exchange is always real-time compliant; but this could not be true if the MONITOR component do again a buffering of the proactively received data.

In any case, the format of the exchanged flows must be established in order to ensure the correct interaction between PROBES and MONITOR. If legacy sources of data are used then an adapter must be deployed in order to ensure its availability. A non-exhaustive list of fields that could be exchanged between PROBES and MONITOR is the following:
- Layer 4 protocol (TCP, UDP, etc).
- First and last packet timestamps.
- Source and destination IP addresses in the flow.
- Source and destination TCP or UDP ports in the flow.
- Number of sent and received packets.
- Number of sent and received bytes.
- TCP state or, at least, TCP flags involved in the flow.
- Certain application header data, such as DNS, HTTP, SMTP, SIP and others.

### - MONITOR-COMPILER

As stated in the specific MONITOR and COMPILER sections, the communication between these two components of the proposed invention architecture is done by means of databases. Two are the reasons for this:
1. The high amount of captured flows does not allow simple memory buffering
2. Most of the anomaly detection algorithms need a wide time windows to perform their normal behavior models. Of course, real-time built of models is possible in some anomaly detection algorithms, but, since this task is not critical, it will always be done in a non reahtime fashion.

The deployed database must allow the MONITOR to store the flows built in the exchange format agreed between the PROBE and the MONITOR (see previous section). These stored flows can be queried by the COMPILER as well, which will generate the models and store them in another database.

### - MONITOR - LOGGER

The alarms generated by the MONITOR are sent to the LOGGER component in a specific format, for which candidate fields could be the following:
- Identifier of the attacker.
- Identifier of the attacked host.
- Involved protocol.
- Timestemp for the alert.
- Type of attack/anomaly type.
- DETECTOR identifier.
- Feedback information such as original data causing the alarm rise at the DETECTOR, extended targets list (if there is not a unique one), etc.

### • Detectors

The system foresees the use of advanced algorithms to Improve the efficacy of the anomaly detection systems. These advanced algorithms come from the artificial intelligence field, being the neural networks and the clustering algorithms the main candidates to be used.

Neural networks and other supervised machine learning algorithms [10] have demonstrated several times its power in classification problems, due to their capability to generalize solutions by means of a few training examples; their adaptability; and their low false positives rate.

However, it is not always is possible to use supervised algorithms, especially when there is not an expertise able to label or pre-classify the training examples. When this occurs, unsupervised algorithms [11] such as clustering are needed. Clustering is very useful in self-generation of classes of traffic, behaviors, etc.

A couple of DETECTORS being part of the DETECTORS LIBRARY are detailed here. These DETECTORS are examples of the advanced detection algorithms envisioned for proposed the Multi-algorithmic ADS. Other simple algorithms such as volumetric traffic monitoring, absolute counts of packets or flows between nodes, and periodic flows detection are not described since they are not innovative algorithms although they can perfectly be developed over the proposed invention.

Further DETECTORS not documented here could be added to the Multi-algorithmic ADS in the form of extensions of the current patent.

### - DNS-based domain-flux detector

This DETECTOR aims to detect domain-flux [12] 0activities in the monitored DNS traffic, which can denote the presence of a bot [7].

Bots within a botnet usually implements DNS queries in order to discover their command-and-control (C&C) server, this allows bots masters to change the real location (the IP address) of the server without reconfiguring their bots. While fixed FQDN's are easy to detect and filter, bots implement the domain-flux technique, which dynamically generate a high amount of FQDN's for the C&C server in order to synchronize with the master. These dynamically generated FQDN's can be based on the current timestamp, or they can be a set of pseudo-randomly generated ones, being only one of the possibilities the valid one. In any case, this technique generates a lot of NX_DOMAIN (and other) responses when querying the DNS server. This detector analyzes these anomalous responses.

Thus, DNS responses are analyzed and a set of features is extracted within an interval of time, being the following an example of features set:
- Number of NX_DOMAIN responses.
- Number of FORMAT_ERROR responses.
- Number of REFUSED responses.
- Number of SERVER_FAILURE responses.
- Number of different queried FQDN's.
- Number of one-layer FQDN's
- Number of two-layer FQDN's.
- Number of three-layer or more FQDN's.
- Number of suspicious top-level-domains (TLD).
- Number of layer two domains with length under 6.
- Number of layer two domains with length over 5 and under 21.
- Number of layer two domains with length over 20.
- Number of layer two domains with number of vocals under 0.3%
- Number of layer two domains with number of digits over 0.5%

These features compound a vector of characteristics that is evaluated using a neural network. This neural network is previously trained (supervised) using examples of vectors containing values for all the above features and providing an additional field, a label. This label will provide information regarding the convenience of raise an alarm or not when a similar vector is found in the traffic.

The DETECTOR uses, therefore, a unique pre-build default model - the specific neural network configuration resulting after the training phase.

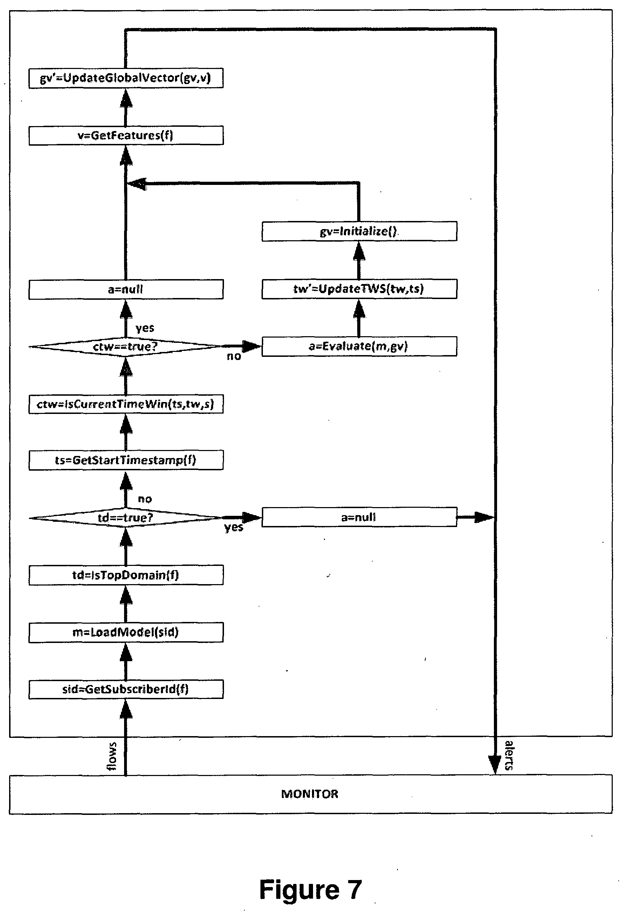

A flow chart was provided to illustrate the proposed DETECTOR in Figure 7, wherein some variables are described in the following table:

| Variable name | Description |
|---|---|
| f | Flow |
| sid | Subscriber identifier |
| m | Model for the subscriber identifier (currently a default one) |
| td | Is the current flow related to a top domain? |
| ts | Timestamp for the current flow |
| tw | Start timestamp of the current time window |
| tw' | Updated tw |
| s | Size of the time window |
| ctw | Is the current flow in the current time window? |
| a | Alert |
| v | Features vector get from the current flow |
| gv | Global accumulated vector regarding the current time window |
| gv' | Updated gv |

### • Suspicious traffic clustering

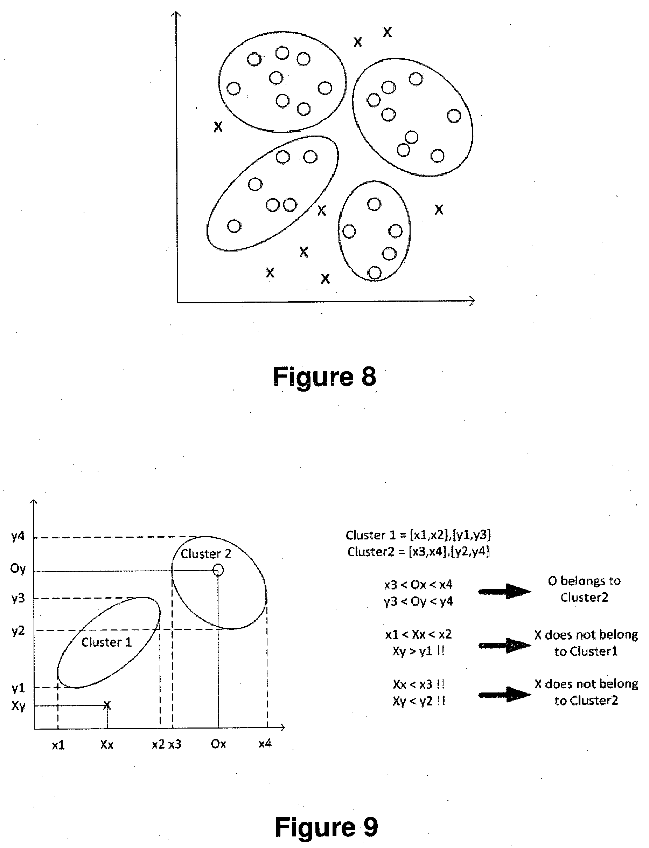

The basics of this DETECTOR rely in the building of a personalized model regarding the values of certain characteristics within an interval period. Unlike the previous DETECTOR, no expertise is used to train this one, i.e. an unsupervised algorithm is going to be used. Specifically, an Expectation-Maximization (EM) clustering algorithm [13] will define the classes of traffic each user is commonly involved in. Then, in a second step, anomalies will be detected if a pattern of traffic different from the normal ones appears. Graphically, this process was shown in the 2-features simplified picture of Figure 8, where the circles represented clusters of data, the "o" represented a normal vector and a "x" was an anomaly:

However, the key point is not the algorithm but the features of the vectors that will feed the EM implementation. Features such as the number of packets/bytes/flows sent and received seem to be valid candidates, but these characteristics are not statistically stables over time. On the contrary, stable features are needed; better ones are those related, precisely, with abnormal behaviors. This DETECTOR considers at least the following ones (counts regard to an interval of time):
- Number of flows having the destination located in a not-usual country.
- Number of flows having the destination included in a black list.
- Number of flows using a not-usual protocol.
- Number of suspicious TCP flows (only SYN flows, only SYN+ACK flows, only FIN flows, only FIN+ACK flows).
- Number of flows over 10 KB length.
- Number of flows over 50 KB length.
- Number of very little flows (under half MTU).
- Number of flows not generated by the modeled entity.

Most of the above features should have nonzero values, but very close to zero, in the normal case. This is not relevant since a user can access one or two legitimate servers located in a not-usual country, for instance; the important thing is to find abnormal values.

Not usual countries and not-usual protocols are defined performing a previous statistic regarding top accessed countries ant top used protocols during certain time interval.

The flow chart for the suspicious traffic clustering DETECTOR is the same than in the DNS-base domain-flux DETECTOR one, but being the evaluation function a different one. In this case the evaluation function checks weather the accumulated vector maps any clusters within the model (is normal behavior) or not (is an anomaly). In this sense a quick cluster belonging algorithm is proposed.

Cluster belonging functions may be complex, especially when large feature vectors are used. Here a quick evaluation function is presented, based on a simplification of the obtained clusters: for each cluster and for each dimension or feature its boundaries are calculated, i.e. the minimum and maximum values the feature can take regarding the current cluster. Then, the cluster belonging function is as simple as checking if each feature within the evaluated vector is inside the boundaries of the cluster's same feature. The idea can be easily seen in a 2-features space, as shown in Figure 9.

### ▪ Advantages of the invention

### 1. Efficacy advantages

### - Per-entity and per-algorithm basis behavior modeling

The proposed invention allows per-entity and per-algorithm based behavior modeling, addressing statistically little and sophisticated attacks that would not be detected in a per-network basis. Nevertheless, this Multi-algorithmic ADS allows too the definition of global behavior models.

### - Advanced detection algorithms

The algorithms detailed before are based on complex artificial intelligence and machine learning algorithms which provide flexible, self-adapting, self-learning and accuracy mechanisms to detect both general anomalies and traffic specific abnormal behaviors, such as domain-flux.

### 2. Efficiency advantages

### - Common framework for monitoring applications developing

The architecture showed in this document aims to be a reference model when implementing collaborative detection systems, specifically collaborative anomaly detection applications. As seen in the previous State of the Art section, several attempts to define such kind of applications have led to a mess of concepts that do not help to know if an architecture has emerge from an algorithm or vice versa, and the worst, doing hard to integrate both new algorithms and new architecture requirements. The proposed system gives to developers a common framework to design new anomaly detection applications, but also to add those new applications to existing ones in an aseptic fashion. This is clearly an advantage to network administrators (mainly telecommunications operators) that want to include to their detection systems portfolio a new detection strategy or algorithm without interfering with the existing ones.

### - Processing distribution

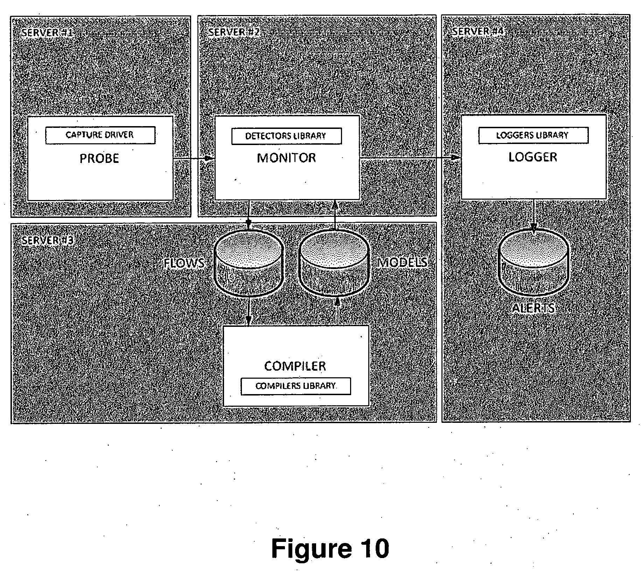

All the components of this architecture can be easily distributed among several physical devices; the single requirement is that the developer of the NADS implements the interfaces between modules using one of the many communications technologies such as sockets, web services, RPC, RMI, etc. Figure 10 showed an example of such distributed deployment within four different servers.

Processing distribution also aids in the scalability of the developed system, since the inclusion of a heavy-processing algorithm may be solve, for example, including a dedicated server for those detection algorithm and implementing a TCP/IP-based interface with the MONITOR.

### - Single monitoring point for a wide variety of applications

The reader must have into account that monitoring points are limited due to technical constraints (fibber taps make weaker the optical signal when dividing it; port mirroring at routers or switches consume lot of resources that can be subtracted to traffic processing; or directly the business cannot be stopped by cutting the line, after all, either physical tapping or logical mirroring must be performed). As seen, the Multi-algorithmic ADS just needs one single monitoring point common to all the deployed applications.

### - Legacy probes integration

The PROBE component does not need to be developed from the scratch. Many others well-known flow generation systems such as Netflow [8] can be used. The only requirement to do such integration is to include a normalization step.

A person skilled in the art could introduce changes and modifications in the embodiments described without departing from the scope of the invention as it is defined in the attached claims.

### ACRONYMS

- ADS: Anomaly Detection System
- Al: Artificial Intelligence
- CPU: Central Processing Unit
- C&C: Command and Control
- DNS: Domain Name System
- DoS: Denial of Service
- EM: Expectation-Maximization
- FQDN: Fully Qualified Domain Name
- HTTP: Hyper-Test Transfer Protocol
- IP: Internet Protocol
- IDS: Intrusion Detection System
- ISP: Internet Service Provider
- KB: Kilo Bytes
- MTU: Maximum Transfer Unit
- NADS: Network Anomaly Detection System
- NIDS: Network Intrusion Detection System
- RAM: Random Access Memory
- SIEM: Security Information and Events Management
- SMTP: Simple Mail Transfer Protocol
- SOA: Service Oriented Architecture
- TCP: Transport Control Protocol
- TLD: Top Layer Domain
- UDP User: Datagram Protocol

### REFERENCES

[1] Snort IDS. http://www.snort.org/
[2] Bro IDS. http://bro-ids.org/
[3] "Spambot" at Wikipedia. http://en.wikipedia.org/wiki/Spambot
[4] "Denial-of-service attack" at Wikipedia. http://en.wikipedia.org/wiki/Donial-of-service_attack
[5] "Port scanner" at Wikipedia. http://en.wikipedia.org/wiki/Port_scanner
[6] Proventia ADS by IBM.
   http://www-935.ibm.com/services/uk/index.wss/offering/iss/y1026942
[7] "Botnets" at Wikipedia. http://en.wikipedia.org/wiki/Botnets
[8] Cisco IOS NetFlow. http://www.cisco.com/en/US/products/ps6601/products_ios_protoco)_group_home.html
[9] "SEM" at Wikipedia. http://en.wikipedia.org/wiki/Security_event_manager
[10] "Supervised learning" at Wikipedia. http://en.wikipedie.org/wiki/Supervised_learning
[11] "Unsupervised learning" at Wikipedia. http://en.wikipedia.org/wiki/Unsupervised_learning
[12] "Fast-flux" at Wikipedia. http://en.wikipedia.org/wiki/Fast_flux
[13] "Expectation-maximization algorithm" at Wikipedia http://en.wikipedia.org/wiki/Expectation-maximization_algorithm
[14] "Anomaly detection" at Wikipedia http://en.wikipedia.org/wikit/Anomaly_detection
[15] "Intrusion detection system" at Wikipedia http-//en.wikipedia.org/wiki/Intrusion-detection-system

## Claims

1. A method to detect malicious software, said detection being performed in an Anomaly Detection System ADS, by analyzing the behavior of a network and looking for deviations with respect to a normality, said normality indicating common behavior of users of said network and being defined previous to said detection, said method comprising:
- building a plurality of detection models for each one of a plurality of different entities of said network, each of said plurality of detection models adapted to said different entities of said network and to different algorithms, said different algorithms implementing different detection strategies and said plurality of detection models representing said normality; and
- representing said plurality of detection models in a two-dimensional matrix, one dimension of said matrix corresponding to a number of said different entities of said network and the other dimension of said matrix corresponding to a number of said different algorithms employed.

2. A method as per claim 1, comprising monitoring traffic of said network, said traffic comprising packets traversing said network, and preparing said packets for said different algorithms, or for said different detection strategies, by aggregating said packets into flows.

3. A method as per claim 2, comprising storing said traffic in order to build said plurality of detection models when said ADS is operating in storing mode.

4. A method as per claim 2 or 3, comprising:
- processing said flows according to at least part of said different algorithms when said ADS is operating in detection mode, said different algorithms being defined in a detectors library, said detectors library at least allowing adding, removing or modifying algorithms; and
- comparing said flows processed with at least part of said plurality of detection models.

5. A method as per claim 5 when depending on claim 3, comprising building said plurality of detection models according to a compilers library which contains one model generator per algorithm, each model generator defining a compiler to be used with said traffic stored when operating in said storing mode.

6. A method as per claim 5, comprising having a default model generator contained in said compilers library to build at least part of said plurality of detection models.

7. A method as per claim 4, 5 or 6, comprising logging alarms generated when detecting said malicious software according to said comparison between said flows processed with said at least part of said different algorithms and said at least part of said plurality of detection models.

8. A method as per claim 7, wherein said alarms contain at least part of information of the following non closed list: identifier of attacker, identifier of attacked host, involved protocol, timestamp for the alert, type of attack or anomaly type, algorithm identifier and feedback information.

9. A method as per claim 8, wherein said different algorithms are defined according to neural networks, supervised machine learning algorithms, clustering algorithms and/or simple algorithms of the following non closed list: volumetric traffic monitoring, absolute counts of packets or flows between nodes and periodic flows detection.

10. A method as per claim 9, comprising implementing a given algorithm according to a Domain Name System DNS, based domain-flux detector, said given algorithm detecting domain-flux activities in a monitored DNS traffic by analyzing DNS responses, said analysis of DNS responses comprising:
- extracting a plurality of features from said DNS responses;
- building a vector of characteristics with said plurality of features;
- evaluating said vector of characteristics using a neural network, said neural network being previously trained with examples of vectors; and
- providing, by said neural network, a label indicating the convenience to raise an alarm according to said evaluation.

11. A method as per claim 10, wherein at least part of said plurality of features are contained in the following non closed list: number of NX_DOMAIN responses, number of FORMAT_ERROR responses, number of REFUSED responses, number of SERVER_FAILURES responses, number of different queried fully qualified domain names QDNs, number of one-layer FQDNs, number of two-layer FQDNs, number of three-layer or more FQDNs, number of suspicious top-level domains, number of layer two domains with length under 6, number of layer two domains with length over 5 and under 21, number of layer two domains with length over 20, number of layer two domains with number of vocals under 0.3% and number of layer two domains with number of digits over 0.5%.

12. A method as per claim 8, comprising implementing a concrete algorithm according to an Expectation-Maximization clustering algorithm, wherein said concrete algorithm identifies classes of traffic, groups said classes of traffic in clusters and detects an anomaly if a pattern of traffic not belonging to one of said clusters appears.

13. A method as per claim 12, comprising feeding said concrete algorithm with a vector of features of said flows, said features being stable over time and being contained in the following non closed list: number of flows having destination located in a not-usual country, number of flows having destination in a black list, number of flows using a not-usual protocol, number of suspicious TCP flows, number of flows over 10 KB length, number of flows over 50 KB length, number of flows under half Maximum Transmission Unit and number of flows not generated by a modelled entity, wherein said suspicious TCP flows comprise only SYN flows, only SYN+ACK flows, only FIN flows and only FIN+ACK flows.

14. A method as per claim 13, comprising calculating boundaries of each of said clusters or of each feature of said vector of features, and detecting an anomaly if a value of a feature of each vector of features is outside the boundaries of corresponding cluster or corresponding feature of said vector of features.

15. A system to detect malicious software, said detection being performed in an Anomaly Detection System, or ADS, by analyzing the behavior of a network and looking for deviations with respect to a normality, said normality indicating common behaviour of users of said network and being defined previous to said detection, said system comprising a probe module for traffic monitoring of said network connected to a controller module in charge of performing said detection, wherein said controller module is provided of a plurality of detection models built by means of a compiler module for each one of a plurality of different entities of said network, each of said plurality of detection models adapted to said different entities of said network and to different algorithms, said different algorithms implementing different detection strategies and said plurality of detection models representing said normality.

16. A system as per claim 15, wherein a first interface between said probe module and said controller module allows sending traces of traffic in the form of flows from said probe monitor to said controller module every time that said flows are ready to be shared or when said controller module requests said flows.

17. A system as per claim 16, wherein said probe module adapts said traces of traffic to flows and allows availability in said flows of at least part of the following fields: layer 4 protocol, first and last packet timestamps, source and destination IP addresses in the flow, number of sent and received packets, number of sent and received bytes, TCP flags involved in the flow and application header data.

18. A system as per claim 16 or 17, wherein said controller module is provided with a flows database wherein at least said flows are stored and said compiler module is provided with a models database wherein at least said plurality of detections models is stored.

19. A system as per claim 18, wherein a second interface is deployed between said controller module and said compiler module in order to allow communication between said controller module and said flows database, between said flows database and said compiler module and between said compiler module and said models database.

20. A system as per any of previous claims 15 to 19, wherein a logger module connected to said controller module is provided in order to log alarms generated by said controller module when detecting said malicious software, said controller module and said logger module communicating by means of a third interface.

21. A system as per claim 20, wherein said probe module, said controller module, said compiler module and/or said logger module are distributed in different physical devices or servers, said first interface, said second interface and/or said third interface using at least one of the communication technologies of the following non closed list: sockets, web services, rcp commands and Remote Method Invocation.

## Patentansprüche

1. Verfahren zum Erkennen von schädlicher Software, wobei das Erkennen in einem Anomalieerkennungssystem ADS (Anomaly Detection System) durch Analysieren des Verhaltens eines Netzwerks und einer Suche nach Abweichungen bezüglich einer Normalität durchgeführt wird, wobei die Normalität ein übliches Verhalten von Nutzern des Netzwerks angibt und vor der Erkennung definiert wird,
wobei das Verfahren Folgendes umfasst:
- Erstellen mehrerer Erkennungsmodelle für jede von mehreren verschiedenen Einrichtungen des Netzwerks, wobei jedes der mehreren Erkennungsmodelle an die verschiedenen Einrichtungen des Netzwerks und an verschiedene Algorithmen angepasst ist, wobei die verschiedenen Algorithmen verschiedene Erkennungsstrategien umsetzen und die mehreren Erkennungsmodelle die Normalität darstellen; und
- Darstellen der mehreren Erkennungsmodelle in einer zweidimensionalen Matrix, wobei eine Dimension der Matrix einer Anzahl der verschiedenen Einrichtungen des Netzwerks entspricht und die andere Dimension der Matrix einer Anzahl der verschiedenen eingesetzten Algorithmen entspricht.

2. Verfahren nach Anspruch 1, umfassend das Überwachen von Traffic des Netzwerks, wobei der Traffic Pakete umfasst, die das Netzwerk durchlaufen, und das Präparieren der Pakete für die verschiedenen Algorithmen oder für die verschiedenen Erkennungsstrategien durch ein Sammeln der Pakete in Strömen.

3. Verfahren nach Anspruch 2, umfassend das Speichern des Traffics, um die mehreren Erkennungsmodelle zu erstellen, wenn das ADS im Speichermodus arbeitet.

4. Verfahren nach Anspruch 2 oder 3, umfassend:
- Verarbeiten der Ströme nach mindestens einem Teil der verschiedenen Algorithmen, wenn das ADS im Erkennungsmodus arbeitet, wobei die verschiedenen Algorithmen in einer Detektorenbibliothek definiert werden, wobei die Detektorenbibliothek mindestens das Hinzufügen, Entfernen oder Verändern von Algorithmen ermöglicht; und
- Vergleichen der Ströme, die mit mindestens einem Teil der mehreren Erkennungsmodellen verarbeitet werden.

5. Verfahren nach Anspruch 4, wenn dieser von Anspruch 3 abhängt, umfassend das Erstellen der mehreren Erkennungsmodellen nach einer Compiler-Bibliothek, welche einen Modellgenerator pro Algorithmus enthält, wobei jeder Modellgenerator einen Compiler definiert, der mit dem gespeicherten Traffic zu verwenden ist, wenn er in dem Speichermodus arbeitet.

6. Verfahren nach Anspruch 5, umfassend dass es einen Default-Modell-Generator aufweist, der in der Compilerbibliothek enthalten ist, um mindestens einen Teil der mehreren Erkennungsmodellen zu erstellen.

7. Verfahren nach Anspruch 4, 5 oder 6, umfassend das Aufzeichnen von Alarmen, die erzeugt werden, wenn die schädliche Software nach dem Vergleich zwischen den Strömen, die mit mindestens dem Teil der verschiedenen Algorithmen verarbeitet werden, und mindestens dem Teil der mehreren Erkennungsmodellen erkannt wird.

8. Verfahren nach Anspruch 7, wobei die Alarme mindestens einen Teil von Informationen der folgenden nicht geschlossenen Liste enthalten: eine Kennung eines Angreifers, eine Kennung eines angegriffenen Hosts, ein involviertes Protokoll, ein Zeitstempel für den Alarm, eine Art von Attacke oder eine Anomalieart, eine Algorithmuskennung und Feedback-Informationen.

9. Verfahren nach Anspruch 8, wobei die verschiedenen Algorithmen nach neuralen Netzwerken, überwachten Maschinenlernalgorithmen, Cluster-Algorithmen und/oder einfachen Algorithmen der folgenden nicht geschlossenen Liste definiert werden: volumetrische Traffic-Überwachung, absolute Zählungen von Paketen oder Strömen zwischen Knoten und Erkennen von periodischen Strömen.

10. Verfahren nach Anspruch 9, umfassend das Umsetzen eines gegebenen Algorithmus nach einem auf einem Domain Name System DNS basierten Domain-Flux-Detektor, wobei der gegebene Algorithmus Domain-Fluss-Aktivitäten in einem überwachten DNS-Traffic durch Analysieren von DNS-Antworten erkennt, wobei die Analyse von DNS-Antworten Folgendes umfasst:
- Extrahieren mehrerer Eigenschaften aus den DNS-Antworten;
- Erstellen eines Vektors mit Merkmalen mit den mehreren Eigenschaften;
- Auswerten des Vektors mit Merkmalen unter Verwendung eines neuralen Netzwerks, wobei das neurale Netzwerk zuvor mit Beispielen von Vektoren trainiert wurde; und
- Bereitstellen durch das neurale Netzwerk einer Markierung, die die Angemessenheit angibt, einen Alarm nach der Auswertung zu auszulösen.

11. Verfahren nach Anspruch 10, wobei mindestens ein Teil der mehreren Eigenschaften in der folgenden nicht geschlossenen Liste enthalten ist: eine Anzahl von NX_DOMAIN-Antworten, eine Anzahl von FORMAT_ERROR-Antworten, eine Anzahl von REFUSED-Antworten, eine Anzahl von SERVER_FAILURES-Antworten, eine Anzahl von verschiedenen angefragten vollqualifizierten Domänennamen FQDN (Fully Qualified Domain Names), eine Anzahl von FQDN's mit einer Schicht, eine Anzahl von FQDN's mit zwei Schichten, eine Anzahl von FQDN's mit drei oder mehr Schichten, eine Anzahl von verdächtigen Top-Level-Domains, eine Anzahl von Schicht-2-Domänen mit einer Länge von weniger als 6, eine Anzahl von Schicht-2-Domänen mit einer Länge von mehr als 5 und weniger als 21, eine Anzahl von Schicht-2-Domänen mit einer Länge von über 20, eine Anzahl von Schicht-2-Domänen mit einer Anzahl von Vokalen von weniger als 0,3 % und eine Anzahl von Schicht-2-Domänen mit einer Anzahl von Ziffern von über 0,5 %.

12. Verfahren nach Anspruch 8, umfassend das Umsetzen eines konkreten Algorithmus nach einem Erwartungs-Maximierungs-Cluster-Algorithmus, wobei der konkrete Algorithmus Traffic-Klassen kennzeichnet, die Traffic-Klassen in Cluster gruppiert und eine Anomalie erkennt, wenn ein Traffic-Muster auftaucht, welches nicht zu einem der Cluster gehört.

13. Verfahren nach Anspruch 12, umfassend das Speisen des konkreten Algorithmus mit einem Vektor mit Eigenschaften der Ströme, wobei die Eigenschaften über die Zeit stabil sind und in der folgenden nicht geschlossenen Liste enthalten sind: eine Anzahl von Strömen, die ein Ziel aufweisen, das in einem ungewöhnlichen Land liegt, eine Anzahl von Strömen, die ein Ziel aufweisen, das in einer Black-List liegt, eine Anzahl von Strömen, die ein ungewöhnliches Protokoll verwenden, eine Anzahl von verdächtigen TCP-Strömen, eine Anzahl von Strömen mit einer Länge von über 10 KB, eine Anzahl von Strömen mit einer Länge von über 50 KB, eine Anzahl von Strömen mit weniger als der Hälfte der maximalen Übertragungseinheit und eine Anzahl von Strömen, die nicht durch eine modellierte Einrichtung erzeugt wurden, wobei die verdächtigen TCP-Ströme lediglich SYN-Ströme, lediglich SYN+ACK-Ströme, lediglich FIN-Ströme und lediglich FIN+ACK-Ströme umfassen.

14. Verfahren nach Anspruch 13, umfassend das Berechnen von Grenzen von jedem der Cluster oder von jeder Eigenschaft des Vektors mit Eigenschaften, und das Erkennen einer Anomalie, wenn sich ein Wert einer Eigenschaft jedes Vektors mit Eigenschaften außerhalb der Grenzen eines entsprechenden Clusters oder einer entsprechenden Eigenschaft des Vektors mit Eigenschaften befindet.

15. System zum Erkennen von schädlicher Software, wobei das Erkennen in einem Anomalieerkennungssystem bzw. ADS durch Analysieren des Verhaltens eines Netzwerks und ein Suchen nach Abweichungen bezüglich einer Normalität durchgeführt wird, wobei die Normalität ein übliches Verhalten von Nutzern des Netzwerks angibt und vor dem Erkennen definiert wird, wobei das System ein Sondenmodul zur Traffic-Überwachung des Netzwerks umfasst, das an einem Controller-Modul angeschlossen ist, das die Durchführung des Erkennens übernimmt, wobei das Controller-Modul mit mehreren Erkennungsmodellen versehen ist, die durch ein Compiler-Modul für jede von mehreren verschiedenen Einrichtungen des Netzwerks erstellt sind, wobei jedes der mehreren Erkennungsmodellen an die verschiedenen Einrichtungen des Netzwerks und an verschiedene Algorithmen angepasst ist, wobei die verschiedenen Algorithmen verschiedene Erkennungsstrategien umsetzen und die mehreren Erkennungsmodelle die Normalität darstellen.

16. System nach Anspruch 15, wobei eine erste Schnittstelle zwischen dem Sondenmodul und dem Controller-Modul jedes Mal das Senden von Traffic-Spuren in Form von Strömen von dem Sondenmonitor zu dem Controller-Modul ermöglicht, wenn die Ströme bereit sind, um geteilt zu werden, oder wenn das Controller-Modul die Ströme anfragt.

17. System nach Anspruch 16, wobei das Sondenmodul die Traffic-Spuren an Ströme anpasst und eine Verfügbarkeit in den Strömen von mindestens einem Teil der folgenden Felder ermöglicht: ein Layer-4-Protokoll, erste und letzte Paket-Zeitstempel, Quellen- und Ziel-IP-Adressen in dem Strom, eine Anzahl von gesendeten und empfangenen Paketen, eine Anzahl von gesendeten und empfangenen Bytes, TCP-Markierungen, die in dem Strom involviert sind, und Anwendungs-Header-Daten.

18. System nach Anspruch 16 oder 17, wobei das Controller-Modul mit einer Strom-Datenbank versehen ist, in welcher mindestens die Ströme gespeichert sind, und das Compiler-Modul mit einer Modell-Datenbank versehen ist, in welcher mindestens die mehreren Erkennungsmodelle gespeichert sind.

19. System nach Anspruch 18, wobei eine zweite Schnittstelle zwischen dem Controller-Modul und dem Compiler-Modul eingesetzt wird, um eine Kommunikation zwischen dem Controller-Modul und der Strom-Datenbank, zwischen der Strom-Datenbank und dem Compiler-Modul und zwischen dem Compiler-Modul und der Modell-Datenbank zu ermöglichen.

20. System nach einem der Ansprüche 15 bis 19, wobei ein Aufzeichnungsmodul, das an das Controller-Modul angeschlossen ist, vorgesehen ist, um Alarme aufzuzeichnen, die durch das Controller-Modul erzeugt werden, wenn die schädliche Software erkannt wird, wobei das Controller-Modul und das Aufzeichnungsmodul durch eine dritte Schnittstelle kommunizieren.

21. System nach Anspruch 20, wobei das Sondenmodul, das Controller-Modul, das Compiler-Modul und/oder das Aufzeichnungsmodul in verschiedenen physikalischen Geräten oder Servern verteilt sind, wobei die erste Schnittstelle, die zweite Schnittstelle und/oder die dritte Schnittstelle mindestens eine der Kommunikationstechnologien der folgenden nicht geschlossenen Liste verwenden: Sockets, Web-Dienste, rcp-Befehle und Remote Method Invocation.

## Revendications

1. Procédé pour détecter un logiciel malveillant, ladite détection étant réalisée dans un Système de Détection d'Anomalie SDA, en analysant le comportement d'un réseau et en cherchant des déviations par rapport à une normalité, ladite normalité indiquant un comportement commun d'utilisateurs dudit réseau et étant définie préalablement à ladite détection, ledit procédé comprenant :
- la construction d'une pluralité de modèles de détection pour chacune d'une pluralité de différentes entités dudit réseau, chacun de ladite pluralité de modèles de détection étant adapté auxdites différentes entités dudit réseau et aux différents algorithmes, lesdits différents algorithmes mettant en oeuvre différentes stratégies de détection et ladite pluralité de modèles de détection représentant ladite normalité ; et
- la représentation de ladite pluralité de modèles de détection dans une matrice bidimensionnelle, une dimension de ladite matrice correspondant à un nombre desdites différentes entités dudit réseau et l'autre dimension de ladite matrice correspondant à un nombre desdits différents algorithmes employés.

2. Procédé selon la revendication 1, comprenant la surveillance du trafic dudit réseau, ledit trafic comprenant des paquets circulant sur ledit réseau, et la préparation desdits paquets pour lesdits différents algorithmes, ou pour lesdites différentes stratégies de détection, en rassemblant lesdits paquets en flux.

3. Procédé selon la revendication 2, comprenant le stockage dudit trafic afin de construire ladite pluralité de modèles de détection lorsque ledit SDA est en train d'opérer en mode stockage.

4. Procédé selon les revendications 2 ou 3, comprenant :
- le traitement desdits flux selon au moins une partie desdits différents algorithmes lorsque ledit SDA est en train d'opérer en mode détection, lesdits différents algorithmes étant définis dans une bibliothèque de détecteurs, ladite bibliothèque de détecteurs permettant au moins d'ajouter, de retirer ou de modifier des algorithmes ; et
- la comparaison desdits flux traités avec au moins une partie de ladite pluralité de modèles de détection.

5. Procédé selon la revendication 4 lorsqu'elle dépend de la revendication 3, comprenant la construction de ladite pluralité de modèles de détection selon une bibliothèque de compilateurs qui contient un générateur de modèle par algorithme, chaque générateur de modèle définissant un compilateur à utiliser avec ledit trafic stocké lorsque l'on opère dans ledit mode stockage.

6. Procédé selon la revendication 5, comprenant la possession d'un générateur de modèle de défaillance contenu dans ladite bibliothèque de compilateurs pour construire au moins une partie de ladite pluralité de modèles de détection.

7. Procédé selon la revendication 4, 5 ou 6, comprenant des alarmes d'enregistrement générées lorsque l'on détecte ledit logiciel malveillant selon ladite comparaison entre lesdits flux traités avec ladite au moins une partie desdits différents algorithmes et ladite au moins une partie de ladite pluralité de modèles de détection.

8. Procédé selon la revendication 7, dans lequel lesdites alarmes contiennent au moins une partie des informations de la liste non exhaustive suivante : identifiant d'attaquant, identifiant d'hôte attaquée, protocole impliqué, horodatage pour l'alerte, type d'attaque ou type d'anomalie, identifiant d'algorithme et informations en retour.

9. Procédé selon la revendication 8, dans lequel lesdits différents algorithmes sont définis selon des réseaux neuronaux, des algorithmes d'apprentissage-machine supervisés, des algorithmes de regroupement et/ou d'algorithmes simples de la liste non exhaustive suivante : surveillance volumétrique de trafic, nombre absolu de paquets ou flux entre les noeuds et la détection de flux périodiques.

10. Procédé selon la revendication 9, comprenant la mise en oeuvre d'un algorithme donné selon un système de nom de domaine DNS, un détecteur de flux de domaine basé, ledit algorithme donné détectant des activités de flux de domaine dans un trafic DNS surveillé en analysant les réponses DNS, ladite analyse de réponses DNS comprenant :
- l'extraction d'une pluralité de propriétés à partir desdites réponses DNS ;
- la construction d'un vecteur de caractéristiques avec ladite pluralité de propriétés ;
- l'évaluation dudit vecteur de caractéristiques en utilisant un réseau neuronal, ledit réseau neuronal étant préalablement instruit avec d'exemples de vecteurs ; et
- l'approvisionnement, par ledit réseau neuronal, d'un label indiquant l'utilité de déclencher une alarme selon ladite évaluation.

11. Procédé selon la revendication 10, dans lequel au moins une partie de ladite pluralité de propriétés sont contenues dans la liste non exhaustive suivante : nombre de réponses NX_DOMAIN, nombre de réponses FORMAT_ERROR, nombre de réponses REFUSED, nombre de réponses SERVER_FAILURES, nombre de différents noms de domaine complètement qualifiés FQDNs requis, nombre de FQDNs à couche unique, nombre de FQDNs à deux couches, nombre de FQDNs à trois ou plusieurs couches, nombre de domaines de niveau supérieur suspects, nombre de couches deux domaines avec une longueur en dessous de 6, nombre de couches deux domaines avec une longueur au-dessus de 5 et en dessous de 21, nombre de couches deux domaines avec une longueur au-dessus de 20, nombre de couches deux domaines avec un nombre de vocaux en dessous de 0,3 % et nombre de couches deux domaines avec un nombre de chiffres au-dessus de 0,5 %.

12. Procédé selon la revendication 8, comprenant la mise en oeuvre d'un algorithme concret selon un algorithme de regroupement d'espérance-maximisation, dans lequel ledit algorithme concret identifie des classes de trafic, regroupe lesdites classes de trafic dans des regroupements et détecte une anomalie si un schéma de trafic n'appartenant pas à l'un desdits regroupements apparaît.

13. Procédé selon la revendication 12, comprenant l'apport audit algorithme concret d'un vecteur de propriétés desdits flux, lesdites propriétés étant stables dans le temps et étant contenues dans la liste non exhaustive suivante : nombre de flux ayant une destination localisée dans un pays inhabituel, nombre de flux ayant une destination dans une liste noire, nombre de flux utilisant un protocole inhabituel, nombre de flux TCP suspects, nombre de flux au-dessus d'une longueur de 10 KB, nombre de flux au-dessus d'une longueur de 50 KB, nombre de flux en dessous de la moitié de l'unité de transmission maximale et nombre de flux non générés par une entité modélisée, dans lequel lesdits flux TCP suspects comprennent seulement des flux SYN, seulement des flux SYN+ACK, seulement des flux FIN et seulement des flux FIN+ACK.

14. Procédé selon la revendication 13, comprenant le calcul des limites de chacun desdits regroupements ou de chaque propriété dudit vecteur de propriétés, et la détection d'une anomalie si une valeur d'une propriété de chaque vecteur de propriétés est en dehors des limites du regroupement correspondant ou de la propriété correspondante dudit vecteur de propriétés.

15. Système pour détecter un logiciel malveillant, ladite détection étant réalisée dans un Système de Détection d'Anomalie, ou SDA, en analysant le comportement d'un réseau et en cherchant des déviations par rapport à une normalité, ladite normalité indiquant un comportement commun d'utilisateurs dudit réseau et étant définie préalablement à ladite détection, ledit système comprenant un module de sonde pour la surveillance de trafic dudit réseau connecté à un module contrôleur chargé de réaliser ladite détection, dans lequel ledit module contrôleur est pourvu d'une pluralité de modèles de détection construits au moyen d'un module compilateur pour chacune d'une pluralité de différentes entités dudit réseau, chacun de ladite pluralité de modèles de détection étant adapté auxdites différentes entités dudit réseau et aux différents algorithmes, lesdits différents algorithmes mettant en oeuvre différentes stratégies de détection et ladite pluralité de modèles de détection représentant ladite normalité.

16. Système selon la revendication 15, dans lequel une première interface entre ledit module de sonde et ledit module contrôleur permet d'envoyer des traces de trafic sous la forme de flux depuis ledit moniteur de sonde audit module contrôleur à chaque fois que lesdits flux sont prêts à être partagés ou lorsque ledit module contrôleur demande lesdits flux.

17. Système selon la revendication 16, dans lequel ledit module de sonde adapte lesdites traces de trafic aux flux et permet une disponibilité dans lesdits flux d'au moins une partie des champs suivants : protocole de couche 4, premiers et derniers horodatages de paquets, adresses IP source et destination dans le flux, nombre de paquets envoyés et reçus, nombre d'octets envoyés et reçus, drapeaux TCP impliqués dans les données d'en-tête de flux et d'application.

18. Système selon la revendication 16 ou 17, dans lequel ledit module contrôleur est pourvu d'une base de données de flux dans lequel au moins lesdits flux sont stockés et ledit module compilateur est pourvu d'une base de données de modèles dans lequel au moins ladite pluralité de modèles de détection est stockée.

19. Système selon la revendication 18, dans lequel une deuxième interface est déployée entre ledit module contrôleur et ledit module compilateur afin de permettre la communication entre ledit module contrôleur et ladite base de données de flux, entre ladite base de données de flux et ledit module compilateur et entre ledit module compilateur et ladite base de données de modèles.

20. Système selon l'une quelconque des revendications 15 à 19, dans lequel un module enregistreur connecté audit module contrôleur est pourvu afin d'enregistrer les alarmes générées par ledit module contrôleur lorsque l'on détecte ledit logiciel malveillant, ledit module contrôleur et ledit module enregistreur communiquant au moyen d'une troisième interface.

21. Système selon la revendication 20, dans lequel ledit module de sonde, ledit module contrôleur, ledit module compilateur et/ou ledit module enregistreur sont répartis en différents dispositifs ou serveurs physiques, ladite première interface, ladite deuxième interface et/ou ladite troisième interface en utilisant au moins l'une des technologies de communication de la liste non exhaustive suivante : supports, services web, commandes rcp et invocation de méthode à distance.
